# EUROPÄISCHE PATENTSCHRIFT

(11) **EP 4 122 070 B1**
(45) Veröffentlichungstag und Bekanntmachung des Hinweises auf die Patenterteilung: **24.12.2025**
(21) Anmeldenummer: 21702425.6
(22) Anmeldetag: 26.01.2021
(51) Int. Cl.: H02H 7/20, H02H 3/20, H01M 10/48

(54) **SCHUTZVORRICHTUNG FÜR EIN AN EINE SCHNITTSTELLE ANGESCHLOSSENES ELEKTRONISCHES BAUTEIL**
PROTECTIVE DEVICE FOR AN ELECTRONIC COMPONENT CONNECTED TO AN INTERFACE
DISPOSITIF DE PROTECTION POUR UN COMPOSANT ÉLECTRONIQUE CONNECTÉ À UNE INTERFACE

(30) Priorität: 20.03.2020 DE 102020203591
(43) Veröffentlichungstag der Anmeldung: 25.01.2023
(73) Patentinhaber: Robert Bosch GmbH, 70442 Stuttgart (DE)
(72) Erfinder: MACK, Juergen, 73035 Goeppingen (DE); SEGRET, Mickael, 70569 Stuttgart (DE); KLEE, Christoph, 70599 Stuttgart (DE)
(86) Internationale Anmeldenummer: PCT/EP2021/051705
(87) Internationale Veröffentlichungsnummer: WO 2021/185503

(56) Entgegenhaltungen:
- CN-A- 110 797 846
- DE-A1- 10 232 941
- DE-A1- 102011 077 460
- JP-A- 2015 031 639

## Beschreibung

Die vorliegende Erfindung betrifft einen Akkupack mit einer Mehrzahl von Energiespeicherzellen, mit einer elektrischen Schnittstelle zum Laden oder Entladen der Energiespeicherzellen und mit einer Schutzvorrichtung, wobei die Schutzvorrichtung ein elektronisches Bauteil zur Überwachung der Energiespeicherzellen oder zur Identifizierung des Akkupacks über die elektrische Schnittstelle, eine Erfassungseinrichtung zum Erfassen einer elektrischen Spannung am elektronischen Bauteil, eine Überwachungseinrichtung und einen seriell mit dem elektronischen Bauteil geschalteten elektronischen Schalter aufweist. Die Erfindung betrifft ferner ein Verfahren zum Betreiben einer Schutzvorrichtung eines Akkupacks und ist definiert in Anspruch 13.

### Stand der Technik

Um mobil ohne Bindung an ein Energienetz elektrische Leistung zur Verfügung zu haben, gibt es elektrochemische Energieträger, beispielsweise Akkuzellen. Ein derzeit häufig eingesetzter Typ ist die Lithium-Ionen-Zelle, die gute Energie- und Leistungsdichte vereint. Gängige Bauarten sind runde Zellen, Prismenzellen oder Pouch-Zellen.

Um eine Lithium-Ionen-Zelle sicher betreiben zu können, ist es notwendig, ihre Temperatur zu überwachen und die Betriebsparameter von der Temperatur abhängig zu gestalten. Zur Erfassung der Temperatur werden verschiedene Temperatursensoren eingesetzt. Dabei ist wichtig, dass der Sensor möglichst in engem thermischen Kontakt mit der Lithium-Ionen-Zelle steht.

Bekannt sind Akkupacks, bei denen ein Temperatursensor auf einer flexiblen Leiterplatte montiert ist, und mit dieser Leiterplatte mit einem elastischen Element an eine Zelle angedrückt wird. Dadurch ist unterstützt, dass der Temperatursensor thermisch möglichst innig mit einer Zelle verbunden ist.

Häufig wird als Temperatursensor ein Sensor verwendet, der seinen ohmschen Widerstand in Abhängigkeit von der Temperatur ändert. Wird dieser Widerstand bei höherer Temperatur kleiner, spricht man von einem NTC (engl. negative temperature coefficient). In vielen Fällen befindet sich dieser Temperatursensor im Akkupack, wird aber bei einem Gerätesystem mit wechselbarem Akkupack vom Ladegerät oder entladenden Elektrogerät gemessen und ausgewertet. Diese Messung erfolgt typischerweise durch das Anlegen einer Spannung über einen Vorwiderstand an den Temperatursensor, und das Messen und Bewerten des Spannungsabfalls über Vorwiderstand und Temperatursensor. Entsprechende Schutzschaltungen sind beispielsweise aus der DE 102 32 941 A1 für ein Bordnetz eines Fahrzeugs und der DE 10 2011 077460 A1 für ein temperaturempfindliches Teilstück eines supraleitenden Strombegrenzers bekannt.

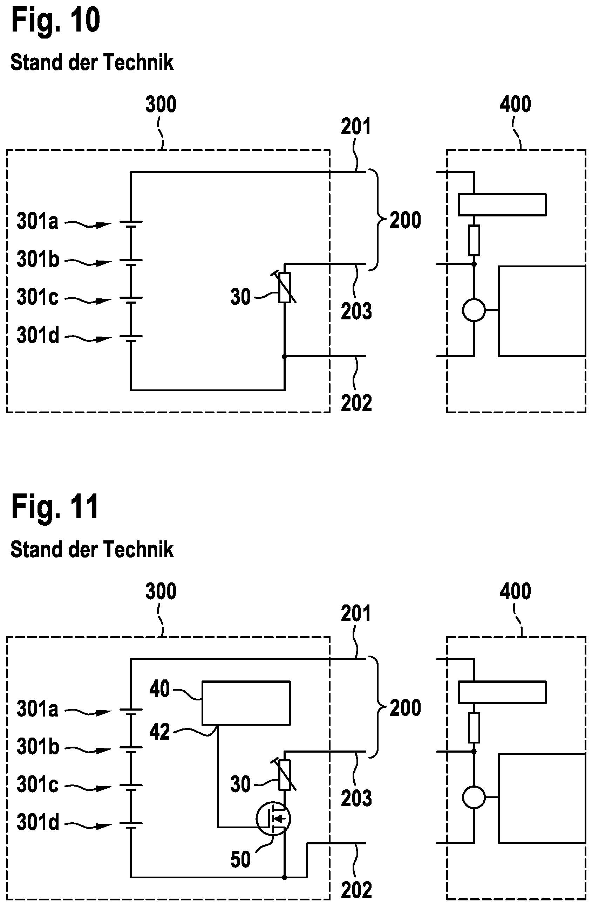

Fig. 10 zeigt einen elektrischen Energiespeicher 300 in Form eines Akkupacks mit einigen Zellen 301a...301d, die über eine Schnittstelle 200 an eine Verwaltungsvorrichtung 400 (z.B. Ladegerät) angeschlossen sind.

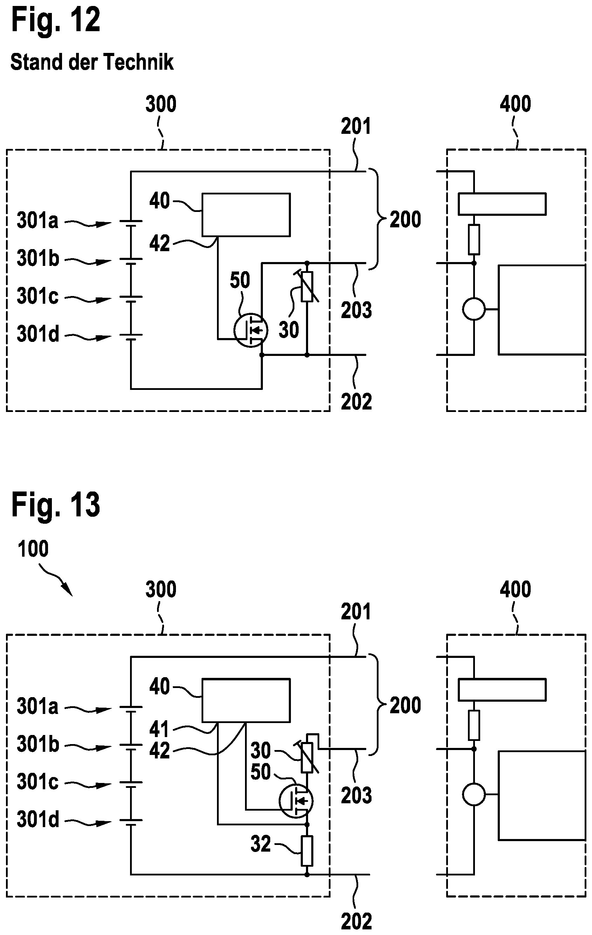

Internationale Standards fordern inzwischen, dass während des Ladens die Einzelzellspannungen eines aus mehreren Zellen zusammengefügten Batteriepacks einzeln überwacht werden. Um im Fehlerfall ein Abschaltsignal mitteilen zu können, ist es üblich, den Temperatursensor zu verfälschen. Dies kann beispielsweise mit einem elektronischen Schalter 50 in Reihe mit dem NTC-Temperatursensor 30 (siehe Fig. 11), oder einem elektronischen Schalter 50 parallel zum NTC-Temperatursensor 30 erfolgen, was prinzipiell in Fig. 12 angedeutet ist.

Dazu sollte im Batteriepack eine Überwachungseinrichtung 40 in Form einer Elektronik zur Einzelzellspannungsüberwachung verbaut sein. Damit der Batteriepack im Ruhezustand nicht von der Überwachungseinrichtung 40 entladen wird, ist es üblich, dass die Überwachungseinrichtung 40 nur eingeschaltet wird, wenn der Batteriepack im Betrieb ist, beispielsweise wenn eine Spannung am NTC-Temperatursensor 30 anliegt.

Um elektrischen Strom im Fehlerfall zu begrenzen, können z.B. auch Schmelzsicherungen eingesetzt werden. Diese setzen einen Teil des fließenden elektrischen Stromes durch Widerstand und Spannungsabfall in thermische Energie um, die ein leitfähiges Material schmelzen lässt und damit den elektrischen Stromfluss unterbricht. Je niedriger der auslösende Nennstrom hierfür ist, desto höher muss prinzipiell der Widerstand sein. Eine andere Möglichkeit, elektrischen Strom zu begrenzen, ist die Verwendung eines Transistors in Verbindung mit einem Widerstand als Stromquelle. Dabei wirkt ein fließender Strom durch Spannungsabfall am Widerstand der Steuerspannung des Transistors entgegen, so dass sich ein Gleichgewicht und damit ein definierter elektrischer Strom einstellen.

Bekannt ist, wie in Fig. 11 dargestellt, eine Überwachungseinrichtung 40 mit integrierten Schaltkreisen, die zur Überwachung von Betriebszuständen innerhalb des elektrischen Energiespeichers 300 verwendet wird. Diese weist beispielsweise Eingänge zur Überwachung von Einzelzellspannungen, Temperatur, oder auch Strom auf. Wird die Spezifikationsgrenze für einen Parameter verletzt, lösen solche Schaltkreise einen Alarm aus. Dies ist typischerweise ein Pegelwechsel an einem Anschluss, wobei ein Pin von logisch Low auf logisch High oder umgekehrt geht.

Wird ein NTC-Temperatursensor verwendet, kann sich bei missbräuchlicher Verwendung oder starker Verschmutzung folgendes Problem ergeben:
Der Messkontakt 203, an den das elektronische Bauteil 30 in Form des NTC-Temperatursensors geschaltet ist, kann entgegen seiner Bestimmung mit dem Pluspol 201 des elektrischen Energiespeichers 300 verbunden werden (z.B. durch Metallteilchen). Dadurch schaltet sich die Überwachungseinrichtung 40 ein und erkennt einen normalen Betriebszustand (elektrische Spannung am Temperatursensor 30). Da die Spannung nicht über einen Vorwiderstand am Temperatursensor 30 anliegt, sondern direkt, findet die Strombegrenzung lediglich durch den Widerstand des NTC-Temperatursensors 30 statt. Der NTC-Temperatursensor 30 erwärmt sich durch die umgesetzte abfallende Leistung, was zu einem niedrigeren NTC-Widerstand und wiederum zu mehr umgesetzter Leistung führt (Mitkopplung oder Teufelskreis).

Da der NTC-Temperatursensor in thermisch innigem Kontakt zu den Zellen 301a...301d steht, entsteht an der entsprechenden Zelle 301a...301d ein heißer Punkt, der zu einem thermischen Ungleichgewicht führen kann und den elektrischen Energiespeicher 300 nachteilig schneller altern lässt.

Herkömmliche Methoden, elektrischen Strom zu begrenzen, gehen durch die Notwendigkeit eines Widerstandes für diesen Fall immer auch mit einer Verfälschung des Temperatursignals einher. Der im Fehlerfall fließende elektrische Strom kann relativ gering sein, zum Beispiel 50mA, aber dennoch zu hohen Temperaturen führen. Eine Schmelzsicherung mit einem Bemessungsstrom von 50mA hat typischerweise einen Widerstand von 10 Ohm. Diesen einzubauen würde zu einer Verfälschung des Temperatursignals führen.

### Offenbarung der Erfindung

Eine Aufgabe der Erfindung ist es, einen verbesserten Schutz für ein zur Überwachung der Energiespeicherzellen eines Akkupacks oder zur Identifizierung des Akkupacks dienendes elektrisches Bauteil einer elektrischen Schnittstelle des Akkupacks bereitzustellen. Gelöst wird diese Aufgabe durch Gegenstände wie sie in den unabhängigen Ansprüchen definiert sind.

Zur Lösung der Aufgabe ist vorgesehen, dass die Überwachungsvorrichtung das elektronische Bauteil mittels des elektronischen Schalters von der elektrischen Schnittstelle abschaltet, wenn eine unzulässig hohe elektrische Spannung am elektronischen Bauteil anliegt, die zumindest einer doppelten Betriebsspannung der Schutzvorrichtung entspricht, und das elektronische Bauelement an die elektrische Schnittstelle anschaltet, wenn am elektronischen Bauteil keine unzulässig hohe elektrische Spannung mehr anliegt.

Vorteilhaft wird auf diese Weise ein hochohmiges Abschalten des zu schützenden elektronischen Bauteils und ein Wiederanschalten im Wegfall des Fehlerfalls erreicht. Als ein Fehlerfall wird dabei eine elektrische Überspannung am zu schützenden elektronischen Bauteil angesehen, die zum Beispiel durch einen elektrischen Kurzschluss aufgrund von Metallstaub zustande kommen kann. Vorteilhaft ist auf diese Weise eine Verwendung einer Sicherung nicht erforderlich. Im Ergebnis ist dadurch eine Nutzung des elektronischen Bauteils sicherer und effizienter möglich, wodurch von dem mit der Schutzvorrichtung geschützten Bauelement vorteilhaft eine verbesserte Schutzfunktion übernommen werden kann.

Gemäß einem zweiten Aspekt wird die Aufgabe gelöst mit einem Verfahren zum Betreiben einer Schutzvorrichtung eines Akkupacks mit einer Mehrzahl von Energiespeicherzellen und mit einer elektrischen Schnittstellezum Laden oder Entladen der Energiespeicherzellen, wobei die Schutzvorrichtung ein elektronisches Bauteil zur Überwachung der Energiespeicherzellen oder zur Identifizierung des Akkupacks über die elektrische Schnittstelle aufweist, mit zumindest den folgenden Schritten:
- Erfassen von elektrischer Spannung am elektronischen Bauteil; und
- Hochohmiges Abschalten des elektronischen Bauteils mittels eines elektronischen Schalters von der elektrischen Schnittstelle wenn eine unzulässig hohe elektrische Spannung am elektronischen Bauteilerfasst wird, die zumindest einer doppelten Betriebsspannung der Schutzvorrichtung entspricht, und Anschalten des elektronischen Bauteils mittels des elektronischen Schalters an die elektrische Schnittstelle, wenn am elektronischen Bauteil keine unzulässig hohe elektrische Spannung mehr erfasst wird.

Bevorzugte Ausführungsformen der vorgeschlagenen Schutzvorrichtung sind Gegenstand von abhängigen Ansprüchen.

Eine bevorzugte Ausführungsform des vorgeschlagenen Akkupacks sieht vor, dass ein Widerstandswert der Abschaltung des elektronischen Bauteils wenigstens ca. 1 kΩ bis ca. 10 kΩ, vorzugsweise ca. 10 kΩ bis ca. 500 kΩ, noch mehr bevorzugt ca. 1MΩ bis ca. 10MΩ beträgt. Vorteilhaft wird auf diese Weise ein hochohmiges Abtrennen des schützenden Bauteils von der Schnittstelle ohne Verwendung eines Latch realisiert.

Eine weitere bevorzugte Ausführungsform des vorgeschlagenen Akkupacks sieht vor, dass die Erfassungseinrichtung als eine Spannungserfassungseinrichtung ausgebildet ist, wobei die Spannungserfassungseinrichtung parallel mit dem elektronischen Bauteil und der Schalteinrichtung geschaltet ist. Vorteilhaft wird dadurch eine Alternative zur Feststellung des Fehlerfalls am zu schützenden elektronischen Bauteil bereitgestellt.

Eine weitere bevorzugte Ausführungsform des vorgeschlagenen Akkupacks sieht vor, dass die Überwachungseinrichtung als ein Schmitt Trigger ausgebildet ist.

Auf einfache Weise kann der Schmitt Trigger einen Normalbetrieb von einer Überspannung unterscheiden, wodurch eine effiziente Erkennung eines zulässigen Betreibens des elektronischen Bauteils unterstützt ist.

Eine weitere bevorzugte Ausführungsform des vorgeschlagenen Akkupacks sieht vor, dass am Ausgang des Schmitt-Triggers eine Endstufe zur Umsetzung von elektrischen Pegel vorgesehen ist. Auf diese Weise ist eine effiziente Weiterverarbeitung der erfassten elektrischen Pegel unterstützt.

Eine weitere bevorzugte Ausführungsform der vorgeschlagenen Schutzvorrichtung sieht vor, dass das elektronische Bauteil ein NTC oder ein Kodierwiderstand ist. Dadurch sind mit der vorgeschlagenen Schutzvorrichtung vorteilhaft unterschiedliche elektronische Bauteile schützbar.

Eine weitere bevorzugte Ausführungsform des vorgeschlagenen Akkupacks sieht vor, dass die Überwachungseinrichtung als ein Mikrorechner ausgebildet ist, wobei insbesondere eine Auswertung der erfassten elektrischen Spannung mit einem Analog-Digital-Umsetzer durchgeführt wird, wobei das Ab- und Anschalten des zu schützenden elektronischen Bauteils per Software umgesetzt wird. Vorteilhaft kann auf diese Art und Weise zum Beispiel ein Verhalten eines Schmitt Triggers per Hard- und Software nachgebildet werden.

Eine weitere bevorzugte Ausführungsform des vorgeschlagenen Akkupacks sieht vor, dass eine Auswertung der erfassten elektrischen Spannung mit einem Kleinsignal-MOS-FET durchgeführt wird. Auf diese Weise kann zur Erfassung des elektrischen Spannungsabfalls am zu schützenden elektronischen Bauteil ein MOS FET als Komparator-Schwellwertschalter eingesetzt werden.

Eine weitere bevorzugte Ausführungsform des vorgeschlagenen Akkupacks sieht vor, dass die erfasste elektrische Spannung einem Komparator zugeführt wird, der über einen Transistor den zu schaltenden MOS-FET ansteuert. Auf diese Weise wird eine weitere Variante einer Erfassung der elektrischen Spannung am zu schützenden elektronischen Bauteil bereitgestellt.

Eine weitere bevorzugte Ausführungsform des vorgeschlagenen Akkupacks sieht vor, dass die Erfassungseinrichtung als eine Stromerfassungseinrichtung ausgebildet ist, die seriell mit dem elektronischen Bauteil und dem elektronischen Schalter verschaltet ist, wobei ein elektrischer Spannungsabfall gemessen wird, wobei für die Auswertung der erfassten elektrischen Spannung eine diskret aufgebaute Halteschaltung vorgesehen ist. Vorteilhaft kann auf diese Weise ein Zustand der Stromerfassungseinrichtung nach Abschalten des zu schützenden elektronischen Bauteils gespeichert werden.

Eine weitere bevorzugte Ausführungsform des vorgeschlagenen Akkupacks sieht vor, dass seriell zum elektronischen Bauteil ein strombegrenzendes Element geschaltet ist. Vorteilhaft wird auf diese Weise ein schädlicher Effekt der elektrischen Überspannung am zu schützenden elektronischen Bauteil zumindest begrenzt.

Eine weitere bevorzugte Ausführungsform des vorgeschlagenen Akkupacks sieht vor, dass das strombegrenzende Element wenigstens eines aus Folgendem ist: Schutzwiderstand, Leiterbahn, Stromquelle, Schmelzsicherung, Widerstand mit einem definierten Auslöseverhalten. Vorteilhaft werden auf diese Weise unterschiedliche Varianten von strombegrenzenden Elementen bereitgestellt.

Die Erfindung wird im Folgenden mit weiteren Merkmalen und Vorteilen anhand von mehreren Figuren im Detail beschrieben. Gleiche oder funktionsgleiche Bauelemente haben dabei gleiche Bezugszeichen. Die Figuren sind insbesondere dazu gedacht, die erfindungswesentlichen Prinzipien zu verdeutlichen und sind nicht unbedingt maßstabsgetreu ausgeführt. Der besseren Übersichtlichkeit halber kann vorgesehen sein, dass nicht in sämtlichen Figuren sämtliche Bezugszeichen eingezeichnet sind.

Offenbarte Vorrichtungsmerkmale ergeben sich analog aus entsprechenden offenbarten Verfahrensmerkmalen und umgekehrt. Dies bedeutet insbesondere, dass sich Merkmale, technische Vorteile und Ausführungen betreffend die Schutzvorrichtung in analoger Weise aus entsprechenden Ausführungen, Merkmalen und Vorteilen des Verfahrens zum Betreiben einer Schutzvorrichtung ergeben und umgekehrt.

In den Figuren zeigt:
- Fig. 1: ein prinzipielles Blockschaltbild einer vorgeschlagenen Schutzvorrichtung;
- Fig. 2: eine erste Ausführungsform einer vorgeschlagenen Schutzvorrichtung;
- Fig. 3: eine weitere Ausführungsform einer vorgeschlagenen Schutzvorrichtung;
- Fig. 4: eine weitere Ausführungsform einer vorgeschlagenen Schutzvorrichtung;
- Fig. 5: eine weitere Ausführungsform einer vorgeschlagenen Schutzvorrichtung;
- Fig. 6: einen prinzipiellen Ablauf eines Verfahrens zum Betreiben einer vorgeschlagenen Schutzvorrichtung;
- Fig. 7: ein Blockschaltbild einer weiteren Ausführungsform einer vorgeschlagenen Schutzvorrichtung;
- Fig. 8: ein Diagramm mit Temperaturkennlinien eines zu schützenden Elements und des Ausgleichselements;
- Fig. 9: ein Ablaufdiagramm eines Verfahrens zum Betreiben der Schutzvorrichtung;
- Fig. 10-12: herkömmliche Anordnungen zum Schutz eines elektrischen Energiespeichers;
- Fig. 13-15: Ausführungsformen einer Schutzvorrichtung für ein an einer Schnittstelle angeschlossenes elektronisches Bauteil; und
- Fig. 16: ein Ablaufdiagramm mit einem Verfahren zum Betreiben einer Schutzvorrichtung für ein einer Schnittstelle angeschlossenes elektronisches Bauteil.

### Beschreibung von Ausführungsformen

Ein Kerngedanke der vorliegenden Erfindung ist die Bereitstellung einer Schutzvorrichtung für ein an eine elektrische Schnittstelle angeschlossenes, zu schützendes elektronisches Bauteil.

Vorteilhaft ist es mit der vorgeschlagenen Schutzvorrichtung möglich, dass eine Schädigung des an die Schnittstelle angeschlossenen Bauteils bzw. Baugruppe im Wesentlichen verhindert werden kann.

Vorgeschlagen wird dazu z.B. ein Unterbinden des elektrischen Stroms nahezu ohne Verfälschung eines Temperatursignals im Nennbetrieb eines als Temperaturerfassungselement genutzten elektronischen Bauteils. Dazu ist vorgesehen, den elektrischen Strom durch das elektronische Bauteil zu erfassen und gegebenenfalls mit einer, vorteilhaft in der Regel bereits vorhandenen, Schaltvorrichtung abzuschalten.

Alternativ kann das zu schützende elektronische Bauteil auch überbrückt werden, so dass ein hoher elektrischer Strom eine Sicherung mit hohem Bemessungsstrom und dadurch bedingt kleinem Widerstand auslösen kann.

Vorteilhaft ist mittels der vorgeschlagenen Schutzvorrichtung ein Schützen von Schaltungsteilen möglich, welche mit einer elektrischen Schnittstelle verbunden und verbindbar sind, wie z.B. tragbare Elektrowerkzeuge, Batteriepacks und dergleichen. Die vorgeschlagene Schutzvorrichtung weist mindestens einen Sensor (Strom- oder Spannungssensor) auf, die das angeschlossene elektronische Bauteil bzw. die angeschlossene Schaltung hochohmig abtrennen kann.

Unter "hochohmig" wird in diesem Zusammenhang ein Zustand verstanden, bei dem keine Beschädigung des elektronischen Bauteils bzw. der elektronischen Baugruppe bzw. keine oder eine nur sehr geringe Energieumsetzung stattfindet. Ferner kann unter "hochohmig" eine Erhöhung des Gesamtwiderstandes um mindestens Faktor 3, besonders vorteilhaft um mindestens Faktor 20, bezogen auf einen Nominalwiderstand verstanden werden. Insbesondere wird zu diesem Zweck ein elektrischer Stromfluss durch das elektronische Bauteil bzw. die elektronische Baugruppe hinreichend begrenzt. Ist die "hochohmige" Abtrennung nicht mehr notwendig, so kann das elektronische Bauteil bzw. Schaltungsteil wieder verbunden (selbstrückstellend), bzw. die Impedanz verringert werden.

Eine Information, ob eine Abtrennung erfolgen soll, wird von den Sensoren geliefert. Eine Überwachungseinrichtung vergleicht die Information mit zumindest einem wohl definierten Wert und leitet im Allgemeinen bei einer Überschreitung eine "hochohmige" Abtrennung ein, wobei eine Überschreitung beispielsweise dann vorliegen kann, wenn die vom Sensor gelieferten Informationen einen geeigneten und üblichen Betriebsbereich verlassen bzw. überschreiten.

Ein wesentlicher Vorteil der vorgeschlagenen Schutzvorrichtung besteht insbesondere darin, dass eine Abtrennung des zu schützenden elektronischen Bauteils bzw. der zu schützenden elektronischen Baugruppe (z.B. ein Akkupack) erfolgt, bevor ein schädlicher Temperaturanstieg erfolgt.

Eine erste Ausführungsvariantenfamilie der vorgeschlagenen Schutzvorrichtung sieht eine Messung der elektrischen Spannung an der Schnittstelle vor. Hierbei ist es möglich, mit einer sehr kurzen Reaktionszeit auf das Vorhandensein einer elektrischen Spannung außerhalb eines definierten Betriebsspannungsbereichs zu reagieren. Befindet sich die elektrische Spannung außerhalb des definierten Betriebsspannungsbereichs, wird das elektronische Bauteil (z.B. NTC oder Kodierwiderstand) bzw. die elektronische Schaltungsgruppe hochohmig von der Schnittstelle und/oder einem gemeinsamen Bezugspotential (z.B. Masse) abgetrennt.

Vorteilhaft ist dadurch keine Einrast-Schaltung ("Latch") notwendig, da die elektrische Spannung nach dem Abschalten aufgrund der Impedanzerhöhung im Wesentlichen nicht sinkt. Üblicherweise bleibt die elektrische Spannung nach einem Abschaltvorgang des elektronischen Bauteils bzw. der elektronischen Baugruppe konstant oder steigt sogar an. Daher ist für die vorgeschlagene Schutzvorrichtung in der Regel nur eine kleine bis gar keine Hysterese notwendig.

Nachfolgend werden Ausführungsformen der vorgeschlagenen Schutzvorrichtung betreffend die oben genannte erste Ausführungsvariantenfamilie näher erläutert.

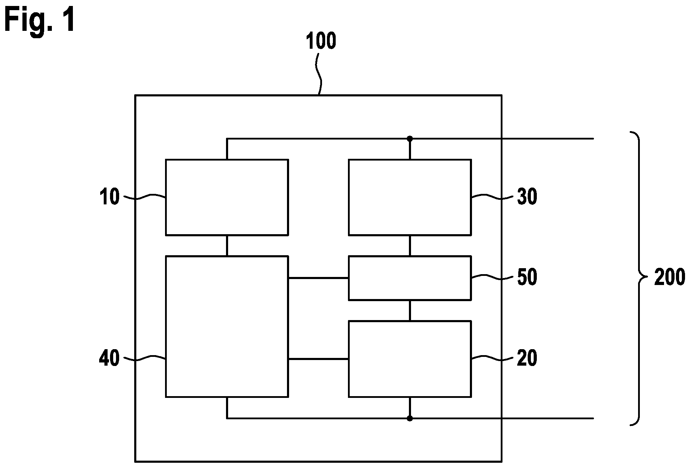

Fig. 1 zeigt ein Blockschaltbild einer vorgeschlagenen Schutzvorrichtung 100 für eine elektrische Schnittstelle 200, an die ein zu schützendes elektronisches Bauteil 30 (z.B. ein NTC oder ein Kodierwiderstand) angeschlossen ist. Erkennbar ist eine Überwachungseinrichtung 40, die funktional mit einer Spannungserfassungseinrichtung 10, einer Stromerfassungseinrichtung 20 und einem elektronischen Schalter 50 zusammenwirkt. Im Ergebnis ist es mit der vorgeschlagenen Schutzvorrichtung 100 für die Schnittstelle 200 möglich, das zu schützende elektronische Bauteil 30 bzw. die zu schützende Baugruppe im Fehlerfall hochohmig von der Schnittstelle 200 abzuschalten und nach Wegfall des Fehlerfalls wieder an die Schnittstelle 200 anzuschalten. In einem Fehlerfall ist es denkbar, dass eine elektrische Spannung an einem Anschluss des zu schützenden elektronischen Bauteils 30 in Form eines NTC eingespeist wird, z.B. über einen Kurzschluss, der aufgrund von Metallstaub ermöglicht wird. Dabei sind die elektrische Spannung und die Impedanz in der Regel nicht vollständig bekannt.

Aufgrund des dadurch verursachten elektrischen Stromflusses durch das elektronische Bauteil 30 in Form des NTC fällt der NTC-Widerstand rapide ab, wobei z.B. der elektrische Strom von ursprünglich ca.10 mA bis ca. 21 mA auf ca. 100 mA steigen kann. Dadurch erfolgen eine Eigenerwärmung des NTCs und damit ein mitgekoppeltes Absinken des NTC-Widerstandswertes. Bei sehr heißem NTC (z.B. 100 Ohm für einen NTC, dessen Widerstand bei Raumtemperatur 6.8k beträgt) können bei 10V Klemmenspannung an der Schnittstelle 200 bis zu 100mA erreicht werden, was eine Belastungsgrenze eines Abschalt-MOS-FETs darstellt. Im Ergebnis sollten an der Schnittstelle 200 elektrische Spannungen größer als ca. 10V verhindert werden, wobei eine elektrische Aktivierungsspannung deutlich höher liegen kann.

Vorgeschlagen wird bei der ersten Ausführungsvariantenfamilie eine Spannungsmessung am Eingang des zu schützenden elektronischen Bauteils 30. Nominal kann eine elektrische Spannung an der Schnittstelle 200 max. 5,0 V betragen. Vorgesehen ist ein sehr hochohmiger Abgriff einer elektrischen Spannung mit einem Komparator oder einem MOS-FET, wodurch eine sehr schnelle Detektion der elektrischen Spannung an der Schnittstelle 200 möglich ist.

Zum Erfassen des elektrischen Spannungsabfalls am zu schützenden elektronischen Bauteil 30 kann auch ein Kleinsignal-MOS-FET mit einem Spannungsteiler und/oder RC-Filter verwendet werden, der eine Überschreitung von mehr als 7V am Pin des zu schützenden elektronischen Bauteils 30 detektiert.

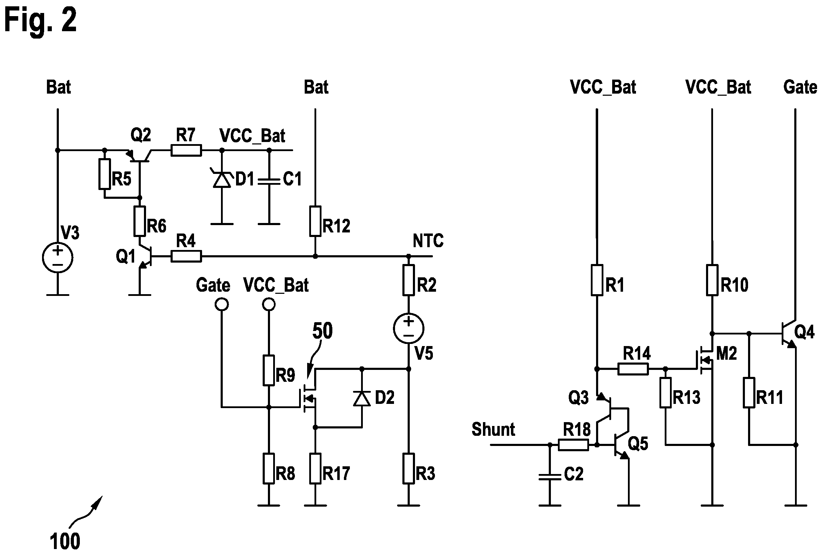

Fig. 2 zeigt eine Ausführungsform einer vorgeschlagenen Schutzvorrichtung 100 für eine elektrische Schnittstelle 200. Erkennbar ist im linken oberen Bereich ein Schaltungsteil, der für eine Simulation der Schutzvorrichtung 100 vorgesehen ist. Man erkennt einen Anschluss des zu schützenden Bauteils 30, der mit "NTC" bezeichnet ist.

Man erkennt eine elektrische Spannung V5, die aufgrund eines Stromflusses bzw. einer Eigenerwärmung des zu schützenden elektronischen Bauteils 30 in Form eines NTC generiert wird. Mittels eines Anschlusses "Gate" kann das zu schützende Bauteil 30 hochohmig von der Schnittstelle 200 (nicht dargestellt) abgeschaltet werden.

Ein Widerstand R12 repräsentiert z.B. Metallstaub, der einen elektrischen Kurzschluss zwischen dem zu schützenden Bauteil 30 und einer Spannungsquelle VCC_Bat bewirkt. Mittels eines Shunts R17 kann der elektrische Strom durch das elektronische Bauteil 30 über einen elektrischen Spannungsabfall messtechnisch erfasst werden, wobei mittels des Anschlusses "Gate" ein elektronischer Schalter 50 in Form eines MOS FET geschaltet werden kann, um das elektronische Bauteil 30 durch ein Öffnen des elektronischen Schalters 50 von der Batteriespannung VCC_Bat abzutrennen.

Der rechte Abschnitt der Schaltung von Fig. 2 repräsentiert eine diskrete Halteschaltung (engl. latch), welche aus den beiden Transistoren Q3 und Q5 einen Thyristor nachbildet, der sich einen Schaltungszustand der Schutzvorrichtung 100 nach dem Abschalten des elektronischen Bauteils 30 "merkt". Im Falle, dass ein elektrischer Überstrom durch das elektronische Bauteil 30 erfasst wurde, bleibt dieser Zustand mittels der Halteschaltung gespeichert, auch wenn der Strom durch das elektronische Bauteil 30 auf Null sinkt, bleibt der elektronische Schalter 50 geöffnet und verhindert dadurch ein Wiederanschalten des elektronischen Bauteils 30 an die Batteriespannung Bat. Zum Zurücksetzen des durch die Halteschaltung gespeicherten Zustands wird die Versorgungsspannung VCC_Bat des Batteriepacks abgeschaltet.

Denkbar ist zum Beispiel auch, die Auswertung des elektrischen Spannungshubes, die in der Anordnung von Fig. 2 mittels des diskreten Shunts R17 durchgeführt wird, mit einem AD-Umsetzer und einer Überwachungseinrichtung 40 in Form eines Mikrorechners durchzuführen. Dazu ist am Mikrorechner ein zusätzlicher ADC-Eingang notwendig, wobei eine Software verwendet wird, um den Fehlerzustand zu detektieren. Denkbar sind hier auch zusätzliche Funktionen, wie z.B. "auto recovery".

Denkbar ist zum Beispiel auch, die Auswertung des Spannungshubes, die in der Anordnung von Fig. 2 mittels des diskreten Shunts R17 durchgeführt wird, mit einem diskreten Halteglied (latch circuit) durchzuführen. Vorteilhaft ist auf diese Weise eine Software in den Detektions- und Abschaltmechanismus nicht involviert (nicht dargestellt). Das zu schützende elektronische Bauteil 30 bleibt solange von der Schnittstelle 200 abgeschaltet, bis eine Kurzschlussbrücke entfernt worden ist. Vorteilhaft ist auch diese Variante der vorgeschlagenen Schutzvorrichtung 100 selbst rückstellend.

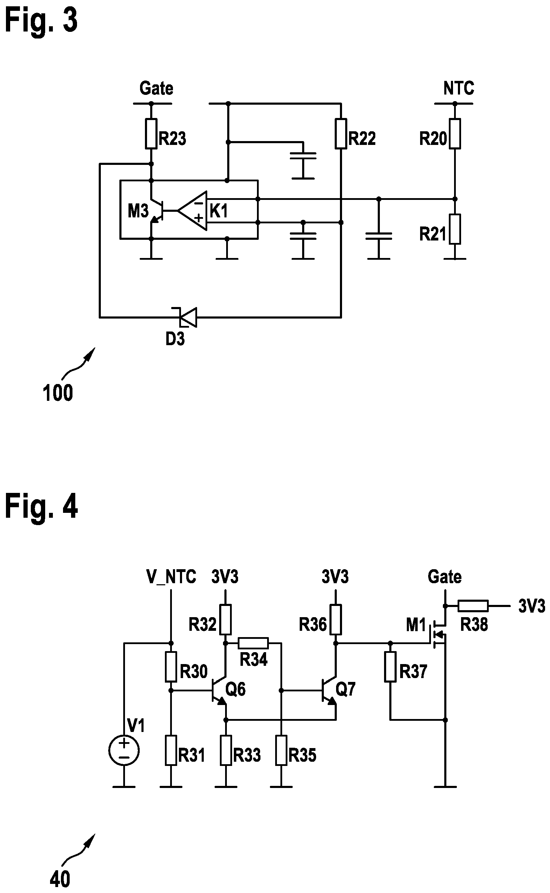

Fig. 3 zeigt eine weitere Ausführungsform einer vorgeschlagenen Schutzvorrichtung 100 für eine elektrische Schnittstelle 200. Man erkennt, dass der Anschluss NTC des zu schützenden elektronischen Bauteils 30 (nicht dargestellt) mit einem Spannungsteiler R20, R21 verbunden ist, der in Summe zum Beispiel einen Widerstandswert von maximal 1 MΩ aufweist. Dadurch wird die elektrische Spannung am zu schützenden elektronischen Bauteil 30 heruntergeteilt und einem nicht-invertierten Eingang eines Komparators K1 zugeführt, an dessen Ausgang ein Transistor M3 zum Ansteuern des Schaltanschlusses Gate des elektronischen Schalters 50 (nicht dargestellt) zum Abschalten des elektronischen Bauteils 30 (nicht dargestellt) betätigt. Eine Einschaltschwelle beträgt dabei bei einer Betriebsspannung von 3,3 V ca. 6,6 V, eine Ausschaltschwelle beträgt ca. 0,6 V. Ein Widerstand R23 wird zusammen mit Kondensatoren der Schutzvorrichtung 100 geeignet dimensioniert, wobei insbesondere darauf geachtet wird, dass das elektronische Bauteil von der Schnittstelle 200 (nicht dargestellt) derart abgeschaltet wird, dass keine Schädigung des elektronischen Bauteils auftritt.

Im Ergebnis wird auf diese Weise mittels des Komparators K1 eine Auswertung des Spannungshubs am zu schützenden elektronischen Bauteil durchgeführt, wobei dadurch vorteilhaft sehr enge Auslöseschwellen einstellbar sind. Bei geeigneten Auslöseschwellen ist auch diese Variante der Schutzvorrichtung 100 selbst rückstellend.

Fig. 4 zeigt eine weitere Ausführungsform einer vorgeschlagenen Schutzvorrichtung 100 für eine elektrische Schnittstelle. Man erkennt eine Überwachungseinrichtung 40, die in Form eines Schmitt-Triggers ausgebildet ist und der die Transistoren Q6, Q7 umfasst. Ferner erkennbar ist eine Endstufe des Schmitt-Triggers in Form von Widerständen R37, R38 und einem MOSFET-Transistor M1 zur Formung von geeigneten elektrischen Pegel. Das zu schützende elektronische Bauteil ist in Fig. 4 nicht dargestellt. Mittels dieser Variante kann eine elektrische Spannung V_NTC am zu schützenden elektronischen Bauteil erfasst werden, wobei mit einer geeigneten Dimensionierung der Widerstände R30-R35 erreicht wird, dass eine Schwelle des Schmitt-Triggers geeignet eingestellt wird, so dass dieser einen Transistor M1 zum Ansteuern des elektronischen Schalters (nicht dargestellt) zum Abschalten des zu schützenden elektronischen Bauteils schaltet. Alternativ kann dies durch eine geeignete Dimensionierung der Widerstände R30-R37 erreicht werden, wenn die Schutzvorrichtung auch den Spannungsteiler zum Schalten von M1 umfasst.

Im Ergebnis wird mit dieser Variante eine Auswertung des elektrischen Spannungshubs am zu schützenden elektronischen Bauteil 30 mit einem diskreten Schmitt-Trigger durchgeführt, mit dem enge Auslöseschwellen einstellbar sind. Bei Erreichen geeigneter Auslöseschwellen ist auch diese Variante der Schutzvorrichtung 100 selbstrückstellend.

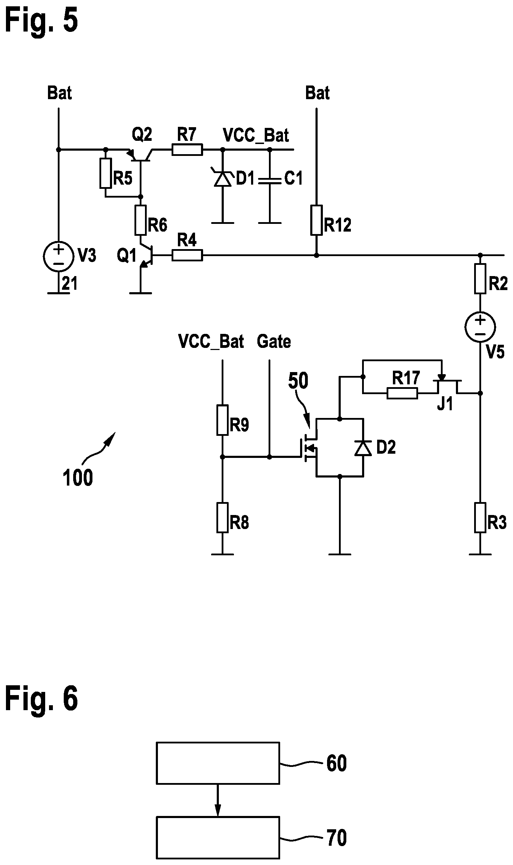

Fig. 5 zeigt eine weitere Ausführungsform einer Schutzvorrichtung 100 für eine elektrische Schnittstelle, die jener der Variante von Fig. 2 ähnelt, wobei aber in diesem Fall eine Konstantstromquelle R17, J1 bzw. eine Stromlimitierung mit einem N-Kanal JFET J1 und einer Gate-Source Gegenkopplung vorgesehen ist. Vorteilhaft erfordert diese Variante nur sehr wenige Bauteile, wodurch im Ergebnis nur ein geringer Platzbedarf auf der Leiterplatte benötigt wird. Auch diese Variante der vorgeschlagenen Schutzvorrichtung 100 ist selbst rückstellend bzw. weist einen geregelten/Gegenkopplungsmodus auf.

Vorteilhaft kann auch vorgesehen sein, die Auswertung des elektrischen Spannungshubes an der Schnittstelle 200 mit einem A/D-Wandler und einem Mikrocontroller durchzuführen. In diesem Fall ist die Überwachungseinrichtung 40 vorzugsweise als ein Mikrorechner ausgebildet, wodurch zum Beispiel der Schmitt Trigger in Software implementiert werden kann, um den Fehlerzustand am elektronischen Bauteil 30 zu detektieren. Vorteilhaft lassen sich dadurch auch zusätzliche Funktionen, wie z.B. "auto recovery" implementieren.

In einer weiteren, nicht in Figuren dargestellten Variante kann auch vorgesehen sein, die Auswertung des Spannungshubes an dem an die Schnittstelle 200 angeschlossenen elektronischen Bauteil 30 mit einem Kleinsignal-MOS-FET vorzunehmen. Vorteilhaft lässt sich auf diese Weise ein großzügiger Spannungsbereich der elektrischen Auslösespannung zum Abschalten des zu schützenden elektronischen Bauteils 30 einstellen.

Vorteilhaft ist für diejenigen Varianten der oben erläuterten Schutzvorrichtungen 100, die die elektrische Spannung am zu schützenden elektronischen Bauteil 30 messen, keine Einrast-Schaltung erforderlich, da die elektrische Spannung an der Schnittstelle 200 nach dem Abschalten des zu schützenden elektronischen Bauteils 30 nicht sinkt bzw. abfällt.

Fig. 6 zeigt einen prinzipiellen Ablauf eines Verfahrens zum Betreiben einer vorgeschlagenen Schutzvorrichtung für ein an einer Schnittstelle 200 angeschlossenes elektronisches Bauteil 30.

In einem Schritt 60 wird ein Erfassen von elektrischer Spannung und/oder elektrischem Strom am elektronischen Bauteil 30 durchgeführt.

In einem Schritt 70 wird ein Abschalten des elektronischen Bauteils 30 von der elektrischen Schnittstelle 200 im Falle durchgeführt, dass eine unzulässig hohe elektrische Spannung am elektronischen Bauteil 30 anliegt, wobei als eine unzulässig hohe elektrische Spannung zumindest die doppelte Nominalspannung erfasst wird, wobei im Falle, dass am elektronischen Bauteil 30 keine unzulässig hohe elektrische Spannung mehr erfasst wird, das elektronische Bauelement 30 mittels des elektronischen Schalters 50 an die Schnittstelle 200 angeschaltet wird.

Typischerweise verwenden Batterie-Packs in der Regel eine Temperaturmessschaltung zur Überwachung der Zelltemperatur. Diese ist häufig über einen NTC auf der Seite der Batterie-Elektronik umgesetzt, sowie ein Kontaktelement, über das ein Tool oder Ladegerät mit einem geeigneten Vorwiderstand eine Versorgungsspannung von außen an den NTC anlegt. Der NTC ist thermisch mit einer oder mehrerer Zellen gekoppelt. Die Spannung am NTC-Kontakt korreliert mit dem Widerstand/der Temperatur des NTCs.

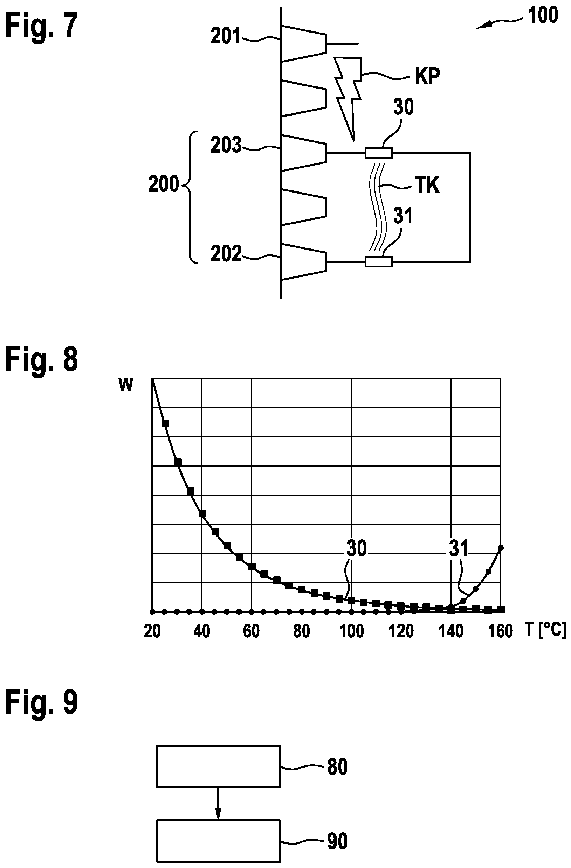

Liegt z.B., wie in Fig. 7 angedeutet, aufgrund von Verschmutzung ein Kurzschluss KP zwischen dem Pluspol 201 des Batterie-Packs und dem NTC-Kontakt 203 vor, fließt ein elektrischer Strom durch den NTC, der nicht über einen definierten Vorwiderstand begrenzt wird. Dies führt zum Aufheizen des NTCs, wodurch dieser aufgrund seines Temperaturverhaltens seinen Widerstand reduziert. Dadurch erhöht sich der elektrische Strom kontinuierlich. Da der Strom quadratisch in die Verlustleistung (P = R x I²) eingeht, erhöht sich bei kleiner werdendem NTC-Widerstand die Verlustleistung am NTC, wodurch das Aufheizen immer weiter beschleunigt wird. Dies kann aufgrund der thermischen Kopplung zur Zelle zu einem Hotspot an der Zelle führen, der zu einem thermischen Ungleichgewicht führen kann und den elektrischen Energiespeicher 300 nachteilig schneller altern lässt.

Vorgeschlagen wird, dieser selbstbeschleunigenden Erwärmung entgegen zu wirken und im genannten Fehlerfall einen sicheren Zustand des Batterie-Packs zu erzeugen. Vorgeschlagen wird zu diesem Zweck eine Anordnung eines PTC-Elements innerhalb der NTC-Temperaturmessschaltung. Erwärmt sich das System durch einen Kurzschluss, erwärmt sich auch der PTC. Dem selbst-verstärkenden Verhalten des NTCs (Widerstand sinkt über Temperatur) wird somit ein selbst-begrenzendes Verhalten des PTCs (Widerstand steigt über Temperatur) entgegengestellt. Dies bewirkt vorteilhaft ein eigensicheres System, was keine weitere Logik, z.B. einen Mikroprozessor erfordert. Die vorgeschlagene Schutzvorrichtung 100 umfasst somit ein einzelnes Bauteil, d.h. einen minimalen Design-Aufwand, und ist aufgrund der Einfachheit kostengünstig sowie in der Implementierung risikoarm.

Eine vorgeschlagene Schutzvorrichtung 100 umfasst somit ein Ausgleichselement 31 in Form eines Bauteils mit positivem Temperaturkoeffizienten (z.B. PTC), welches seriell zum elektronischen Bauteil 30 (z.B. NTC) an einen Pol (z.B. Minuspol 202) des Batterie-Packs oder an einen Signalkontakt 203 der Schnittstelle 200 geschaltet wird. Im "inaktiven" Zustand, d.h. bei Fehlen eines Kurzschlusses am Messkontakt 203 ist das Ausgleichselement 31 derart niederohmig, dass keine relevante Beeinflussung der Temperaturmessung mittels des NTCs stattfindet. Hierzu wird für den PTC ein Widerstandswert gewählt, der klein gegenüber dem NTC-Widerstandswert im relevanten Betriebsbereich ist. Insbesondere Schaltschwellen (z.B. Übertemperatur/Untertemperatur-Abschaltungen) sollten dadurch nicht signifikant verfälscht werden.

Im "aktiven" Zustand, d.h. bei Vorliegen eines Kurzschlusses am Messkontakt 203 stellt sich ein Gleichgewichtszustand ein, gemäß der am Messkontakt 203 anliegenden elektrischen Spannung und der Summe aller Serienwiderstände. Im hohen Temperaturbereich ist dabei der Widerstands-Anstieg des PTCs deutlich höher als der Widerstands-Abfall am NTC, weshalb der Summenwiderstand steigt, bis ein Gleichgewicht vorliegt.

Diese Gleichgewichts-Temperatur wird so ausgelegt, dass keine Gefahr für andere Systemkomponenten (typischerweise Batterie-Zellen des Batterie-Packs) vorliegt.

Vorteilhaft wird das Ausgleichselement 31 über geeignete, im Folgenden genannte technische Maßnahmen thermisch mit dem NTC gekoppelt:
- Verwendung von SMD-Bauteilen für das zu schützende Bauteil 30 und das Ausgleichselement 31, die im Layout nah beieinander platziert und/oder über eine geeignete Kupferverteilung thermisch gekoppelt werden
- Verwendung von Bauteilen für das zu schützende Bauteil 30 und das Ausgleichselement 31 mit möglichst geringen thermischen Kapazitäten
- Verwendung von thermisch leitfähigem Material (z.B. Wärmeleitpaste), um einen Wärmeaustausch zwischen dem zu schützenden Bauteil 30 und dem Ausgleichselement 31 bereitzustellen

Durch diese thermische Kopplung wird erreicht, dass durch das Ausgleichselement 31 in Form des PTC, ein zum "Schalten" (d.h. zum Erreichen einer Selbsterwärmung, die ihn in einen relevanten hochohmigen Bereich treibt) erforderlicher elektrischer Mindeststrom ("Trip Current") fließt. Je niederohmiger der PTC, desto höher ist dieser Trip Current. Die thermische Kopplung zum NTC bewirkt, dass der PTC auch dann warm und damit höherohmig ist, wenn der Trip Current noch nicht erreicht ist. Dies erleichtert die Bauteilauswahl in Richtung niederohmige PTC Bauteile, wodurch unterstützt ist, dass die Temperaturmessung nicht signifikant gestört wird.

Vorteilhaft werden das zu schützende Element 30 und das Ausgleichselement 31 betreffend ihren Temperaturkoeffizienten des elektrischen Widerstands aufeinander abgestimmt. Zu berücksichtigen ist dabei:
- Beeinflussung der Temperaturmessung durch das zusätzliche PTC-Bauelement im Messpfad
- Sicheres "Schalten" des PTCs im abzusichernden Fehlerfall, d.h. Eigenerwärmung aufgrund hinreichenden Stromflusses
- Gleichgewichtstemperatur im abzusichernden Fehlerfall, die keine Gefahr für das Gesamtsystem darstellen darf

Fig. 7 zeigt eine schematische Darstellung einer Schutzvorrichtung 100 mit KontaktElementen und einer Serienschaltung aus zu schützendem Bauteil 30 und Ausgleichselement 31, die zwischen einen Messkontakt 203 und einem Minuspol 202 geschaltet sind. Angedeutet ist ein möglicher Kurzschlusspfad KP zwischen dem Pluspol 201 und dem Messkontakt 203.

Fig. 8 zeigt einen beispielhaften Widerstandsverlauf über der Temperatur eines erfindungsgemäß aufeinander angepassten NTC- und PTC-Elements. Man erkennt, dass der elektrische Widerstand W des elektronischen Bauteils 30 mit steigender Temperatur sinkt und bei ca. 135 °C nahe Null verbleibt. Man erkennt ferner, dass der elektrische Widerstand W des Ausgleichselements 31 im Wesentlichen klein gegenüber dem Widerstand des elektronischen Bauteils 30 ist und mit steigender Temperatur steigt. Die sich einstellende Gleichgewichtstemperatur ist abhängig von der Temperatur, bei der die negative Steigung der Widerstandskurve des elektronischen Bauteils 30 betragsmäßig der positiven Steigung der Widerstandskurve des Ausgleichselements 31 entspricht, was im dargestellten Beispiel ebenfalls ca. bei 135 °C der Fall ist. Zu höheren Temperaturen hin bedeudet dies also einen Anstieg des Gesamtwiderstands und damit eine Reduktion der auftretenden Verlustleistung.

Vorteilhaft kann die vorgeschlagene Schutzvorrichtung 100 auch eine Steuerungselektronik (nicht dargestellt) zum Auswerten der Temperaturmessung aufweisen.

Vorteilhaft kann ein mit der vorgeschlagenen Schutzvorrichtung 100 geschützter elektrischer Energiespeicher als ein Akkupack (z.B. Handwerkzeugmaschinen-Akkupack) ausgebildet sein.

Das Ausgleichselement 31 kann dabei direkt oder indirekt (zum Beispiel über einen Schalter) mit einem Pol 202, 203 des Batterie-Packs verbunden sein.

Ein Wärmeübergangswiderstand zwischen dem elektronischen Bauteil 30 und dem Ausgleichselement 31 ist vorzugsweise derart ausgelegt, dass ein Auslösen des PTC dadurch signifikant begünstigt wird.

Fig. 9 zeigt einen prinzipiellen Ablauf eines vorgeschlagenen Verfahrens zum Herstellen einer Schutzvorrichtung für ein an eine Schnittstelle 200 angeschlossenes elektronisches Bauteil 30, wobei an die Schnittstelle 200 ein elektrischer Energiespeicher angeschlossen ist.

In einem Schritt 80 wird ein Anschließen des Bauteils 30 an einen Pol des elektrischen Energiespeichers durchgeführt.

In einem Schritt 90 wird ein serielles Schalten eines Ausgleichselements 31 zwischen einen Pol 201, 202 des elektrischen Energiespeichers und das elektronische Bauteil 30 oder zwischen das elektronische Bauteil 30 und einen Signalkontakt 203 der Schnittstelle 200 durchgeführt, wobei das Ausgleichselement 31 einen positiven Temperaturkoeffizient des elektrischen Widerstands aufweist, und wobei das Bauteil 30 und das Ausgleichselement 31 thermisch miteinander gekoppelt werden.

Fig. 13 zeigt eine weitere Ausführungsform einer vorgeschlagenen Schutzvorrichtung 100. Die Temperatur der Zellen 310a...301n wird von dem Gerät außerhalb des elektrischen Energiespeichers 300 angeordneten Verwaltungsvorrichtung 400 mit Hilfe eines im elektrischen Energiespeicher 300 angeordneten elektronischen Bauelements 30 in Form eines NTC-Temperatursensors erfasst. Nachdem die Verwaltungsvorrichtung 400 allerdings lediglich zur Erfassung der elektrischen Spannung an der Schnittstelle 200 dient und nicht erfindungswesentlich ist, wird auf nähere Details hier nicht weiter eingegangen. Das elektronische Bauteil 30 könnte alternativ auch als Kodierwiderstand ausgebildet sein.

Der elektrische Energiespeicher 300 verfügt weiterhin über eine Überwachungseinrichtung 40 mit einer Elektronik (z.B. einen Mikrocontroller) zur Überwachung der Einzelzellen 301a...301d. Im Falle, dass die Überwachungseinrichtung 40 einen Fehler feststellt, trennt sie mittels eines seriell zum elektronischen Bauteil 30 geschalteten elektronischen Schalters 50 in Form eines Transistors das elektronische Bauteil von der Schnittstelle 200.

Man erkennt einen weiteren Widerstand 32 ("Messwiderstand "), der in Reihe mit dem elektronischen Schalter 50 geschaltet ist. Die Überwachungseinrichtung 40 verfügt über einen Eingang 41, über den sie eine elektrische Spannung am Messwiderstand 32 erfassen kann. Fließt im Fehlerfall ein hoher elektrischer Strom durch die Reihenschaltung des elektronischen Bauteils 30, des elektronischen Schalters 50 und des Messwiderstands 32, führt dies am Messwiderstand 32 zu einem elektrischen Spannungsabfall, der von der Überwachungseinrichtung 40 am Eingang 41 erfasst wird. Die Überwachungseinrichtung 40 schaltet daraufhin den elektronischen Schalter 50 sperrend, so dass der genannte elektrische Stromfluss unterbrochen wird.

Vorteilhaft kann die Überwachungseinrichtung 40 diesen gesperrten Zustand für eine Mindestzeit beibehalten, beispielsweise länger als 1s, besonders vorteilhaft länger als 1 min. Auf diese Weise kann vorteilhaft vermieden werden, dass der elektronische Schalter 50 gleich wieder eingeschaltet wird, da ja bei unterbrochenem elektrischem Strom auch die elektrische Spannung am Eingang 41 der Überwachungseinrichtung 40 nahe Null ist und damit als unkritisch bewertet würde.

Ein besonderer Vorteil dieser vorgeschlagenen Schutzvorrichtung 100 besteht insbesondere darin, dass der Messwiderstand 32 sehr klein sein kann und damit die eigentliche Temperaturmessung mittels des elektronischen Bauteils 30 nur minimal verfälscht. Vorteilhaft ist ein Widerstandswert kleiner als 1% des Minimalwertes des elektronischen Bauteils 30 über den gesamten Arbeitstemperaturbereich des elektrischen Energiespeichers 300, besonders vorteilhaft ist ein Widerstandswert kleiner als 0.3% des Minimalwertes des elektronischen Bauteils 30 über den gesamten Arbeitstemperaturbereich des elektrischen Energiespeichers 300. Beispielsweise kann der Messwiderstand 32 1 Ohm sein, während jener einer Schmelzsicherung für einen derart geringen elektrischen Strom typischerweise 10 Ohm beträgt. Die Überwachungseinrichtung 40 muss nämlich nicht in der Lage sein, den elektrischen Strom durch das elektronische Bauteil 30 im Normalbetrieb zu erfassen, sondern nur im Überstrom-Fehlerfall.

Dadurch lässt sich diese Variante der vorgeschlagenen Schutzvorrichtung 100 besonders günstig und einfach realisieren.

Bekannt sind integrierte Schaltkreise mit Eingängen, die für eine Batteriestrommessung vorgesehen sind, und bei zu hohem elektrischem Strom in einen Alarm-Zustand gehen. Ein derartiger integrierter Schaltkreis ist ebenfalls geeignet, um in der Anordnung von Fig. 13 eingesetzt zu werden, wobei dann ein Stromeingang der Überwachungseinrichtung 40 als Messeingang verwendet wird. Ein zu hoher elektrischer Strom durch das elektronische Bauteil 30 wird von einer solchen Überwachungseinrichtung 40 dann als zu hoher Batteriestrom interpretiert, was ebenfalls zur Alarmauslösung führt.

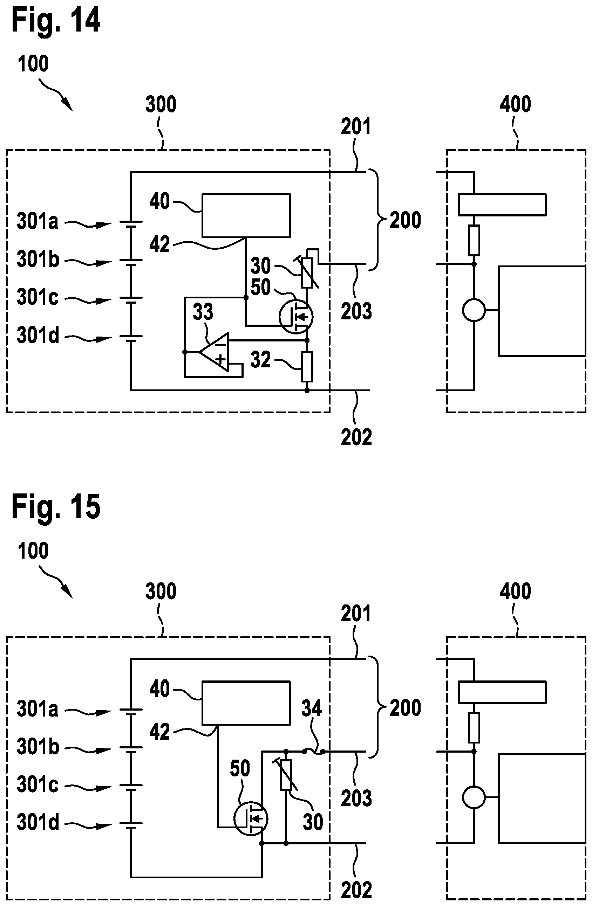

Fig. 14 zeigt ein prinzipielles Schaltbild einer weiteren Ausführungsform einer vorgeschlagenen Schutzvorrichtung 100. Erkennbar ist, dass bei dieser Variante eine unabhängige Schaltung auf Basis einer Komparatorschaltung 33 (Schmitt Trigger) den elektrischen Strom durch das elektronische Bauteil 30 unterbrechen kann. Der elektrische Spannungsabfall über dem Messwiderstand 32 löst in der Komparatorschaltung 33 eine Änderung des Ausgangspegels auf nahe Null V aus. Dies zieht das Gate bzw. die Basis des elektronischen Schalters 50 nach Low, so dass der elektronische Schalter 50 nicht mehr leitet, unabhängig vom Ausgang 42 (Alarmausgang) der Überwachungseinrichtung 40.

Dabei verfügt die Komparatorschaltung 33 über eine Mitkopplung, so dass sie ihren Zustand (d.h. Ausgang auf Null V) beibehält, auch wenn das Messsignal am Eingang nicht mehr anliegt. Diese Variante kann insbesondere dann sinnvoll sein, wenn an der Überwachungseinrichtung 40 kein Eingang mehr frei ist und/oder die Überwachungseinrichtung 40 keine Stromüberwachung aufweist.

Fig. 15 zeigt ein prinzipielles Schalbild mit einer weiteren Ausführungsform einer vorgeschlagenen Schutzvorrichtung 100. Diese Variante ist insbesondere dann zu bevorzugen, wenn das System darauf ausgelegt ist, im Fehlerfall das elektronische Bauteil 30 in Form des NTC-Temperatursensors zu überbrücken. Erkennbar ist ein Sicherungselement 34 (z.B. Schmelzsicherung) in Reihe mit dem elektronischen Bauteil 30, zu dem der elektronische Schalter 50 parallel geschaltet ist. Eine Besonderheit dieser Schmelzsicherung besteht darin, dass sie nicht auf den elektrischen Strom ausgelegt sein muss, der im Fehlerfall durch das elektronische Bauteil 30 fließt, sondern auf einen höheren elektrischen Strom. Im Normalbetrieb wird das Sicherungselement 34 nicht ausgelöst. Dies ist deshalb günstig, weil das Sicherungselement 34 dann einen niedrigen elektrischen Widerstand haben kann und die Temperaturmessung im Nennbetrieb nur geringfügig verfälscht.

Vorgesehen ist, dass die Überwachungseinrichtung 40 den elektronischen Schalter 50 im Normalbetrieb sporadisch bzw. zyklisch für definiert kurze Zeit einschaltet. Vorzugsweise wird die Zeit dabei derart kurz gewählt, dass die angeschlossene Verwaltungsvorrichtung 400 (Tool oder Ladegerät) dies noch nicht als Fehler erkennt. Beispielsweise kann diese Zykluszeit 50ms betragen.

Falls am Eingangskontakt des elektronischen Bauteils 30 jetzt eine hohe elektrische Spannung anliegt, deren Stromfähigkeit nicht begrenzt ist, gibt der elektronische Schalter 50 während dieser Zeit den Weg für einen hohen elektrischen Strom frei, der geeignet ist, das Sicherungselement 34 auszulösen bzw. zu zerstören.

Beispielsweise kann das Sicherungselement 34 als eine Leiterbahnsicherung (engl. trace fuse) ausgebildet sein. Nach IPC-2221 kann z.B. bei einer Leiterbahnbreite von 0,1mm eine Temperaturerhöhung bei 1,1A um 60°C bewirkt werden.

In einer Alternative kann das Sicherungselement 34 auch als ein Fusible-Resistor ausgebildet sein.

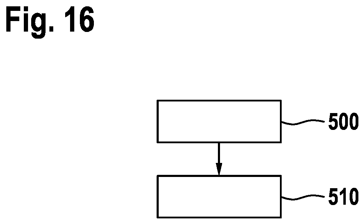

Fig. 16 zeigt einen prinzipiellen Ablauf eines Verfahrens zum Betreiben einer Schutzvorrichtung 100 für ein an einer Schnittstelle 200 angeschlossenes elektronisches Bauteil 30.

In einem Schritt 500 wird ein Erfassen eines elektrischen Spannungsabfalls an einem in Serie mit dem elektronischen Bauteil 30 geschalteten Messwiderstand 32 durchgeführt.

In einem Schritt 510 wird ein Abschalten des elektronischen Bauteils 30 im Falle eines Überschreitens einer definierten Abschaltschwelle des elektrischen Spannungsabfalls durchgeführt.

## Patentansprüche

1. Akkupack (300) mit einer Mehrzahl von Energiespeicherzellen (301a, 301b, 301c, 301d), mit einer elektrischen Schnittstelle (200) zum Laden oder Entladen der Energiespeicherzellen (301a, 301b, 301c, 301d) und mit einer Schutzvorrichtung (100), wobei die Schutzvorrichtung (100) ein elektronisches Bauteil (30) zur Überwachung der Energiespeicherzellen (301a, 301b, 301c, 301d) oder zur Identifizierung des Akkupacks (300) über die elektrische Schnittstelle (200), eine Erfassungseinrichtung (10, 20) zum Erfassen einer elektrischen Spannung am elektronischen Bauteil (30), eine Überwachungseinrichtung (40) und einen seriell mit dem elektronischen Bauteil (30) geschalteten elektronischen Schalter (50) aufweist, **dadurch gekennzeichnet, dass** die Überwachungseinrichtung (40) das elektronische Bauteil (30) mittels des elektronischen Schalters (50) von der elektrischen Schnittstelle (200) hochohmig abschaltet, wenn eine unzulässig hohe elektrische Spannung am elektronischen Bauteil (30) anliegt, die zumindest einer doppelten Betriebsspannung der Schutzvorrichtung (100) entspricht, und das elektronische Bauelement (30) an die elektrische Schnittstelle (200) anschaltet, wenn am elektronischen Bauteil (30) keine unzulässig hohe elektrische Spannung mehr anliegt.

2. Akkupack (300) nach Anspruch 1, **dadurch gekennzeichnet, dass** ein Widerstandswert der Abschaltung des elektronischen Bauteils (30) wenigstens ca. 1 kΩ bis ca. 10 kΩ, vorzugsweise ca. 10 kΩ bis ca. 500 kΩ, noch mehr bevorzugt ca. 1 MΩ bis ca. 10MΩ beträgt.

3. Akkupack (300) nach einem der vorhergehenden Ansprüche, **dadurch gekennzeichnet, dass** die Erfassungseinrichtung (10) als eine Spannungserfassungseinrichtung ausgebildet ist, die parallel mit dem elektronischen Bauteil (30) und dem elektronischen Schalter (50) geschaltet ist.

4. Akkupack (300) nach einem der vorhergehenden Ansprüche, **dadurch gekennzeichnet, dass** die Überwachungseinrichtung (40) als ein Schmitt-Trigger (Q6, Q7) ausgebildet ist.

5. Akkupack (300) nach Anspruch 4, **dadurch gekennzeichnet, dass** am Ausgang des Schmitt-Triggers (Q6, Q7) eine Endstufe (R37, R38) zur Umsetzung von elektrischen Pegel vorgesehen ist.

6. Akkupack (300) nach einem der vorhergehenden Ansprüche, **dadurch gekennzeichnet, dass** das elektronische Bauteil (30) ein NTC oder ein Kodierwiderstand ist.

7. Akkupack (300) nach einem der vorhergehenden Ansprüche, **dadurch gekennzeichnet, dass** die Überwachungseinrichtung (40) als ein Mikrorechner ausgebildet ist, der eine Auswertung der erfassten elektrischen Spannung mit einem Analog-Digital-Umsetzer durchführt, und das Ab- und Anschalten des zu schützenden elektronischen Bauteils (30) per Software umsetzt.

8. Akkupack (300) nach einem der vorhergehenden Ansprüche, **dadurch gekennzeichnet, dass** Kleinsignal-MOS-FET der Schutzvorrichtung (100) zur Auswertung der erfassten elektrischen Spannung dient.

9. Akkupack (300) nach Anspruch 8, **dadurch gekennzeichnet, dass** die erfasste elektrische Spannung einem Komparator (K1) der Schutzvorrichtung (100) zugeführt ist, der über einen Transistor (M3) der Schutzvorrichtung (100) den zu schaltenden Kleinsignal-MOS-FET ansteuert.

10. Akkupack (300) nach einem der vorhergehenden Ansprüche, **dadurch gekennzeichnet, dass** die Erfassungseinrichtung (10) als eine Stromerfassungseinrichtung ausgebildet ist, die seriell mit dem elektronischen Bauteil (30) und dem elektronischen Schalter (50) verschaltet ist, wobei ein elektrischer Spannungsabfall gemessen wird, wobei für die Auswertung der erfassten elektrischen Spannung eine diskret aufgebaute Halteschaltung vorgesehen ist.

11. Akkupack (300) nach einem der vorhergehenden Ansprüche, **dadurch gekennzeichnet, dass** seriell zum elektronischen Bauteil (30) ein strombegrenzendes Element geschaltet ist.

12. Akkupack (300) nach Anspruch 11, **dadurch gekennzeichnet, dass** das strombegrenzende Element wenigstens eines aus Folgendem ist: Schutzwiderstand, Leiterbahn, Stromquelle, Schmelzsicherung, Widerstand mit einem definierten Auslöseverhalten.

13. Verfahren zum Betreiben einer Schutzvorrichtung (100) eines Akkupacks (300) mit einer Mehrzahl von Energiespeicherzellen (301a, 301b, 301c, 301d) und mit einer elektrischen Schnittstelle (200) zum Laden oder Entladen der Energiespeicherzellen (301a, 301b, 301c, 301d), wobei die Schutzvorrichtung (100) ein elektronisches Bauteil (30) zur Überwachung der Energiespeicherzellen (301a, 301b, 301c, 301d) oder zur Identifizierung des Akkupacks (300) über die elektrische Schnittstelle (200) aufweist, mit zumindest den folgenden Schritten (60, 70):
- Erfassen einer elektrischen Spannung am elektronischen Bauteil (30);
- hochohmiges Abschalten des elektronischen Bauteils (30) mittels eines elektronischen Schalters (50) von der elektrischen Schnittstelle (200), wenn eine unzulässig hohe elektrische Spannung am elektronischen Bauteil (30) erfasst wird, die zumindest einer doppelten Betriebsspannung der Schutzvorrichtung (100) entspricht, und Anschalten des elektronischen Bauteils (30) mittels des elektronischen Schalters (50) an die elektrische Schnittstelle (200), wenn am elektronischen Bauteil (30) keine unzulässig hohe elektrische Spannung mehr erfasst wird.

## Claims

1. Rechargeable battery pack (300) having a plurality of energy storage cells (301a, 301b, 301c, 301d), having an electrical interface (200) for charging or discharging the energy storage cells (301a, 301b, 301c, 301d) and having a protective device (100), wherein the protective device (100) has an electronic component (30) for monitoring the energy storage cells (301a, 301b, 301c, 301d) or for identifying the rechargeable battery pack (300) via the electrical interface (200), a detection apparatus (10, 20) for detecting an electrical voltage at the electronic component (30), a monitoring apparatus (40), and an electronic switch (50) connected in series with the electronic component (30), **characterized in that** the monitoring apparatus (40) disconnects the electronic component (30) from the electrical interface (200) in a high-impedance manner by means of the electronic switch (50) when an impermissibly high electrical voltage, which corresponds to at least twice the operating voltage of the protective device (100), is applied to the electronic component (30) and the electronic component (30) is connected to the electrical interface (200) when an impermissibly high electrical voltage is no longer applied to the electronic component (30).

2. Rechargeable battery pack (300) according to Claim 1, **characterized in that** a resistance value of the disconnection of the electronic component (30) is at least approximately 1 kΩ to approximately 10 kΩ, preferably approximately 10 kΩ to approximately 500 kΩ, more preferably approximately 1MΩ to approximately 10MΩ.

3. Rechargeable battery pack (300) according to either one of the preceding claims, **characterized in that** the detection apparatus (10) is designed as a voltage detection apparatus which is connected in parallel with the electronic component (30) and the electronic switch (50).

4. Rechargeable battery pack (300) according to one of the preceding claims, **characterized in that** the monitoring apparatus (40) is designed as a Schmitt trigger (Q6, Q7).

5. Rechargeable battery pack (300) according to Claim 4, **characterized in that** an end stage (R37, R38) for implementing electrical levels is provided at the output of the Schmitt trigger (Q6, Q7).

6. Rechargeable battery pack (300) according to one of the preceding claims, **characterized in that** the electronic component (30) is an NTC or a coding resistor.

7. Rechargeable battery pack (300) according to one of the preceding claims, **characterized in that** the monitoring apparatus (40) is designed as a microcomputer which evaluates the detected electrical voltage using an analogue-to-digital converter, and the disconnection and connection of the electronic component (30) that is to be protected is implemented via software.

8. Rechargeable battery pack (300) according to one of the preceding claims, **characterized in that** a small-signal MOSFET of the protective device (100) is used to evaluate the detected electrical voltage.

9. Rechargeable battery pack (300) according to Claim 8, **characterized in that** the detected electrical voltage is fed to a comparator (K1) of the protective device (100), said comparator using a transistor (M3) of the protective device (100) to actuate the small-signal MOSFET that is to be switched.

10. Rechargeable battery pack (300) according to one of the preceding claims, **characterized in that** the detection apparatus (10) is designed as a current detection apparatus which is interconnected in series with the electronic component (30) and the electronic switch (50), wherein an electrical voltage drop is measured, wherein a latch circuit of discrete design is provided to evaluate the detected electrical voltage.

11. Rechargeable battery pack (300) according to one of the preceding claims, **characterized in that** a current-limiting element is connected in series with the electronic component (30).

12. Rechargeable battery pack (300) according to Claim 11, **characterized in that** the current-limiting element is at least one of the following: protective resistor, conductor track, current source, fuse, resistor with a defined tripping behaviour.

13. Method for operating a protective device (100) of a rechargeable battery pack (300) having a plurality of energy storage cells (301a, 301b, 301c, 301d) and having an electrical interface (200) for charging or discharging the energy storage cells (301a, 301b, 301c, 301d), wherein the protective device (100) has an electronic component (30) for monitoring the energy storage cells (301a, 301b, 301c, 301d) or for identifying the rechargeable battery pack (300) via the electrical interface (200), said method having at least the following steps (60, 70):
- detecting an electrical voltage at the electronic component (30);
- disconnecting the electronic component (30) in a high-impedance manner from the electrical interface (200) by means of an electronic switch (50) when an impermissibly high electrical voltage, which corresponds to at least twice the operating voltage of the protective device (100), is detected at the electronic component (30) and connecting the electronic component (30) to the electrical interface (200) by means of the electronic switch (50) when an impermissibly high electrical voltage is no longer detected at the electronic component (30).

## Revendications

1. Bloc-batterie (300) comportant une pluralité de cellules de stockage d'énergie (301a, 301b, 301c, 301d), une interface électrique (200) pour charger ou décharger les cellules de stockage d'énergie (301a, 301b, 301c, 301d) et un dispositif de protection (100), le dispositif de protection (100) comportant un composant électronique (30) pour surveiller les cellules de stockage d'énergie (301a, 301b, 301c, 301d) ou pour identifier le bloc-batterie (300) par l'intermédiaire de l'interface électrique (200), un dispositif de détection (10, 20) pour détecter une tension électrique sur le composant électronique (30), un dispositif de surveillance (40) et un commutateur électronique (50) connecté en série avec le composant électronique (30), **caractérisé en ce que** le dispositif de surveillance (40) déconnecte le composant électronique (30) par haute impédance de l'interface électrique (200) au moyen du commutateur électronique (50) lorsqu'une tension électrique anormalement élevée, qui correspond au moins au double de la tension de fonctionnement du dispositif de protection (100), est présente sur le composant électronique (30), et connecte le composant électronique (30) à l'interface électrique (200) lorsqu'une tension électrique anormalement élevée n'est plus présente sur le composant électronique (30).

2. Bloc-batterie (300) selon la revendication 1, **caractérisé en ce qu'**une valeur de résistance de la déconnexion du composant électronique (30) est d'au moins environ 1 kΩ à environ 10 kΩ, de préférence d'environ 10 kΩ à environ 500 kΩ, et encore plus préférentiellement d'environ 1 MΩ à environ 10 MΩ .

3. Bloc-batterie (300) selon l'une quelconque des revendications précédentes, **caractérisé en ce que** le dispositif de détection (10) est réalisé sous la forme d'un dispositif de détection de tension qui est connecté en parallèle avec le composant électronique (30) et le commutateur électronique (50).

4. Bloc-batterie (300) selon l'une quelconque des revendications précédentes, **caractérisé en ce que** le dispositif de surveillance (40) est réalisé sous la forme d'un trigger de Schmitt (Q6, Q7).

5. Bloc-batterie (300) selon la revendication 4, **caractérisé en ce qu'**un étage de sortie (R37, R38) destiné à convertir les niveaux électriques est prévu à la sortie du trigger de Schmitt (Q6, Q7).

6. Bloc-batterie (300) selon l'une quelconque des revendications précédentes, **caractérisé en ce que** le composant électronique (30) est un CTN ou une résistance de codage.

7. Bloc-batterie (300) selon l'une quelconque des revendications précédentes, **caractérisé en ce que** le dispositif de surveillance (40) est conçu sous la forme d'un microordinateur qui effectue une évaluation de la tension électrique détectée à l'aide d'un convertisseur analogique-numérique et qui met en œuvre par logiciel la connexion et la déconnexion du composant électronique (30) à protéger.

8. Bloc-batterie (300) selon l'une quelconque des revendications précédentes, **caractérisé en ce que** le MOSFET à faible signal du dispositif de protection (100) sert à évaluer la tension électrique détectée.

9. Bloc-batterie (300) selon la revendication 8, **caractérisé en ce que** la tension électrique détectée est appliquée à un comparateur (K1) du dispositif de protection (100), lequel commande le MOSFET à faible signal à commuter par l'intermédiaire d'un transistor (M3) du dispositif de protection (100).

10. Bloc-batterie (300) selon l'une quelconque des revendications précédentes, **caractérisé en ce que** le dispositif de détection (10) est conçu sous la forme d'un dispositif de détection de courant qui est connecté en série avec le composant électronique (30) et le commutateur électronique (50), une chute de tension électrique étant mesurée, un circuit de maintien discret étant prévu pour l'évaluation de la tension électrique détectée.

11. Bloc-batterie (300) selon l'une quelconque des revendications précédentes, **caractérisé en ce qu'**un élément limiteur de courant est connecté en série avec le composant électronique (30).

12. Bloc-batterie (300) selon la revendication 11, **caractérisé en ce que** l'élément limiteur de courant est au moins l'un des éléments suivants : une résistance de protection, une piste conductrice, une source de courant, un fusible, une résistance à comportement de déclenchement défini.

13. Procédé de fonctionnement d'un dispositif de protection (100) d'un bloc-batterie (300) comportant une pluralité de cellules de stockage d'énergie (301a, 301b, 301c, 301d) et une interface électrique (200) pour charger ou décharger les cellules de stockage d'énergie (301a, 301b, 301c, 301d), le dispositif de protection (100) comportant un composant électronique (30) pour surveiller les cellules de stockage d'énergie (301a, 301b, 301c, 301d) ou pour identifier le bloc-batterie (300) par l'intermédiaire de l'interface électrique (200), comprenant au moins les étapes suivantes (60, 70) :
- détection d'une tension électrique sur le composant électronique (30) ;
- déconnexion du composant électronique (30) par haute impédance de l'interface électrique (200) au moyen d'un commutateur électronique (50) lorsqu'une tension électrique anormalement élevée, qui correspond au moins au double de la tension de fonctionnement du dispositif de protection (100) est détectée sur le composant électronique (30), et connexion du composant électronique (30) à l'interface électrique (200) au moyen du commutateur électronique (50) lorsqu'une tension électrique anormalement élevée n'est plus détectée sur le composant électronique (30).
